# EUROPEAN PATENT APPLICATION

(11) **EP 1 696 433 A2**
(43) Date of publication of application: **30.08.2006**
(21) Application number: 06250899.9
(22) Date of filing: 20.02.2006
(51) Int. Cl.: G11B 17/043

(54) **Disk medium recording and playback device**

(30) Priority: 28.02.2005 JP 2005054163
(71) Applicant: ORION ELECTRIC CO., Ltd., Fukui 915-8555 (JP)
(72) Inventor: Makino, Takeshi, Echizen-city Fukui 915-8555 (JP)
(74) Representative: Paget, Hugh Charles Edward

(57) **Abstract**

To provide a disk medium recording and playback device comprising an opening and closing door for the sake of opening and closing an opening for loading a disk medium into the device, and the device is capable of preventing the disk medium popping out of the device. A convex portion 15a is formed on a side farther from a rotation axis 15b of a flap (opening and closing door) 15 than an extended line L of the same plane as a disk medium 23 on an inner surface side of the flap (opening and closing door) 15 to be approximately in parallel with the same plane so as to catch fragments of the disk medium 23 and the like popping up from inside of the device with the convex portion 15a (FIG. 4 (b)) and prevent the fragments of the disk medium 23 and the like from popping out of the device.

## Description

### BACKGROUND OF THE INVENTION

### Field of the Invention

The present invention relates to a disk medium recording and playback device, and in particular, to the disk medium recording and playback device for preventing a disk medium from popping out of the device in the case where the disk medium rotating for recording and playback is damaged in particular.

### Description of the Related Art

Disk media represented by a CD and a DVD are widely used for reasons of their convenience in handling and the like, and disk medium recording and playback devices for recording and playing back the disk media are also in widespread use. In operation of the disk medium for recording and playing back, the disk medium is rotated at high speed. Therefore, in the cases where some problem occurs to a mechanism (clamper mechanism) for holding the disk medium during the rotation or the disk medium is damaged (it is hardly thinkable that the disk medium gets damaged during playback under normal circumstances while it is possible in the case where a user uses a blemished disk for instance), there is a possibility that the disk medium or fragments thereof fly off and pop out of the device. A conventional art against such a problem is disclosed in Japanese Patent Laid-Open Publication No. 2002-133852 (patent document 1) and so on.

According to the conventional art against such a problem disclosed in the patent document, projections are formed on a disk tray for placing a disk medium and a housing opposed to the disk tray, and vertical space between the projections is rendered smaller than thickness of the disk medium so that the fragments of the disk medium do not fly out of the disk device. The technique effectively prevents the fragments of the disk medium from flying out of the device. As the convex portion (projection) is formed on the disk tray and in proximity to a place for placing the disk medium, there is a possibility that the convex portion may contact a recording surface side of the disk medium and blemish the recording surface on placing the disk medium. Because the space between the projections on the disk tray and the housing opposed to the disk tray is smaller than the thickness of the disk medium, the disk medium is placed aslant (when put on the projection on the disk tray) on placing the disk medium. If the disk tray is housed as-is in the device, the disk medium is sandwiched between the projections and so operation of the device may be blocked and the disk medium may be blemished.

### SUMMARY OF THE INVENTION

The present invention has been made in view of the above-mentioned points. An object thereof is to provide a disk medium recording and playback device comprising an opening and closing door rotatably formed to open outside of the device for the sake of opening and closing an opening for loading the disk medium into the device, capable of preventing the fragments of the disk medium and the like from popping out of the device in the case where the disk medium in rotation is damaged.

A disk medium recording and playback device according to a first aspect of the present invention is the one comprising: a disk device for reading and/or writing a signal from a disk medium; an opening for loading the disk medium into the device; and an opening and closing door for opening and closing the opening, the door rotatably formed to open outside of the device, and wherein a contiguous or noncontiguous convex portion is formed on a side farther from a rotation axis of the opening and closing door than an extended line of the same plane as the disk medium on an inner surface side of the opening and closing door in a state of having the disk medium loaded in the disk medium recording and playback device so as to be approximately in parallel with the same plane.

According to the above configuration, the convex portion is formed on the side farther from the rotation axis of the opening and closing door than the extended line of the same plane as the disk medium on the inner surface side of the opening and closing door in the state of having the disk medium loaded in the device. Therefore, in the case where the disk medium in rotation is damaged and fragments thereof fly off due to a centrifugal force in a direction of the extended line of the same plane as the disk medium to hit the inner surface side of the opening and closing door, the door rotates to open due to an impact of the hit but the fragments of the disk medium contact the rotation axis side of the door from the convex portion formed on the inner surface side of the door so as to be caught by the convex portion and receive an external force toward the rotation axis side of the door as the door further rotates. The "disk medium recording and playback device" is not limited to the device for performing both the recording and playback operations but includes a playback device without a recording function (such as a so-called playback-only machine) and also includes a composite device (such as a television set with a built-in disk medium recording and playback device) having another function (such as television).

The disk medium recording and playback device according to a second aspect of the present invention is the one according to the first aspect, wherein the disk device includes a disk tray for placing the disk medium slidably provided to a frame configuring an enclosure of the disk device; and the opening is a disk tray outlet for exposing the disk tray outside of the device.

According to the above configuration, in the case where, on a so-called tray type disk device, the disk medium in rotation is damaged and fragments thereof hit the inner surface side of the opening and closing door, the door rotates to open due to an impact of the hit but the fragments of the disk medium are caught by the convex portion and receives an external force toward the rotation axis side of the door as the door further rotates.

The disk medium recording and playback device according to a third aspect of the present invention is the one according to the first or second aspect; wherein height of the contiguous or noncontiguous convex portion is at least higher than thickness of the disk medium.

According to the above configuration, it is formed so that the height of the convex portion on the inner surface side of the opening and closing door is higher than the thickness of the disk medium. Therefore, in the case where the disk medium in rotation is damaged and the fragments thereof hit the inner surface side of the opening and closing door, the fragments can be caught by the convex portion more securely.

### BRIEF DESCRIPTION OF THE DRAWINGS

FIG. 1 is a perspective view shows an overview of a state of having removed a top panel of a DVD player.
FIGS. 2 are diagrams show a flap, where (a) is a front view, (b) is a plan view, (c) is a rear view, (d) is a left side view, and (e) is a right side view.
FIG. 3 is a perspective view of the flap.
FIGS. 4 are schematic sectional views along a line A to A of FIG. 1.
FIG. 5 is a perspective view of another flap.
FIG. 6 is a schematic diagram for describing a state in which a disk medium has hit an inner surface side of the flap.
FIGS. 7 are schematic sectional views of a conventional DVD player.

### DETAILED DESCRIPTION OF THE PREFERRED EMBODIMENTS

Hereunder, an embodiment of the present invention will be described by referring to the drawings. The following embodiment is a form for embodying the present invention, which is not intended to limit the present invention to within that scope.

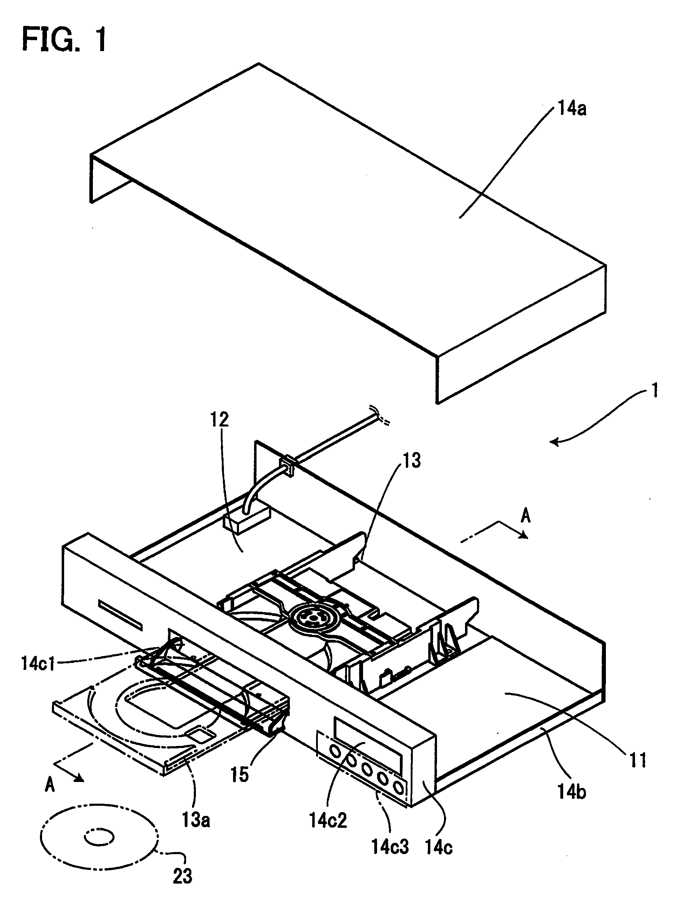

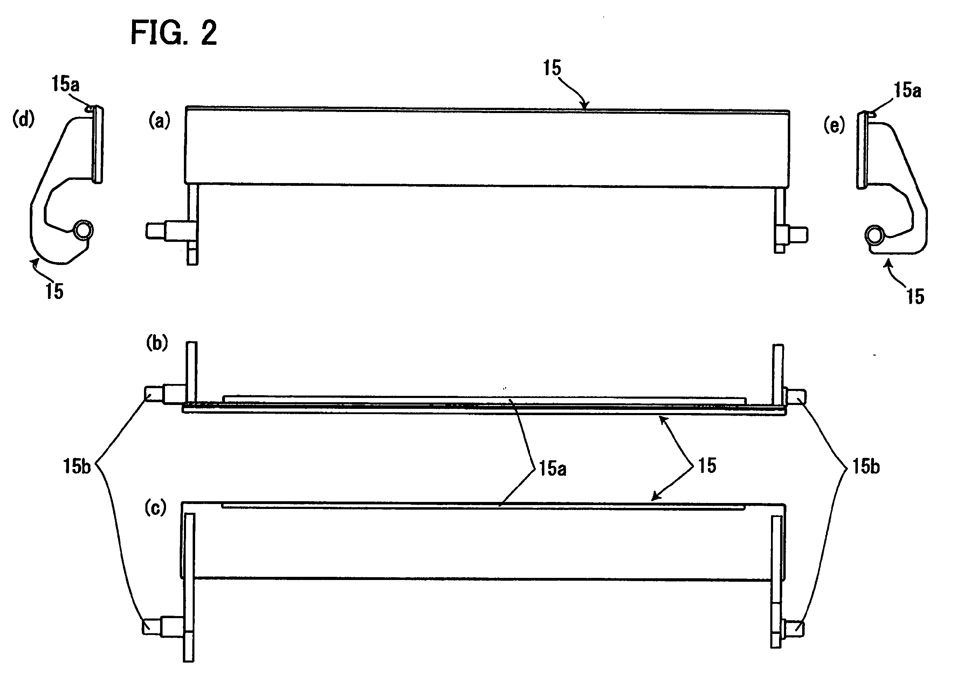

FIG. 1 is a perspective view showing an overview of a state of having removed a top panel of a DVD player relating to the present invention, and FIGS. 2 are diagrams showing a flap (opening and closing door) provided to a front portion of the DVD player.

As shown in FIG. 1, a DVD player 1 as a disk medium (DVD) playback device comprises a main board 11 including an audio/video signals processing portion for processing audio signals and video signals and a control portion for controlling the entire device and the like, a power supply board 12 formed separately from the main board 11, and a DVD playback unit (disk device) 13 for reading the signals from a disk medium (DVD) 23 in a housing 14 (a top panel 14a, a chassis 14b and a front panel 14c). The front panel 14c has a display portion 14c2 for transmitting a display of a display tube (not shown), an operating portion 14c3 as an input interface to the device as well as a disk tray outlet (opening) 14c1 for letting in and out a disk tray 13a of the DVD playback unit 13 formed thereon. Furthermore, the front panel 14c is provided with a flap 15 (opening and closing door) as a door for opening and closing the disk tray outlet 14c1 rotatably formed to open outside of the device. The flap 15 is energized to close the door by an unshown spring member and the like, and opens and closes according to movement of the disk tray 13a (as if pushed out by the disk tray 13a) when letting in and out the disk medium 23.

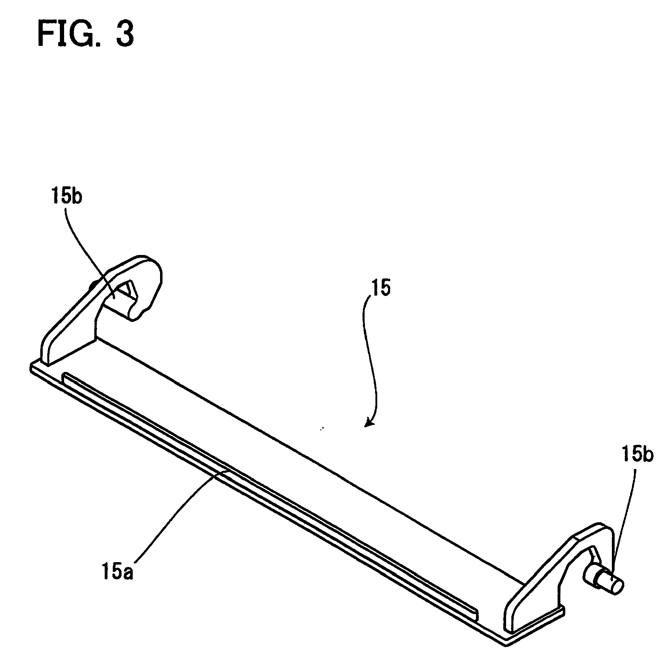

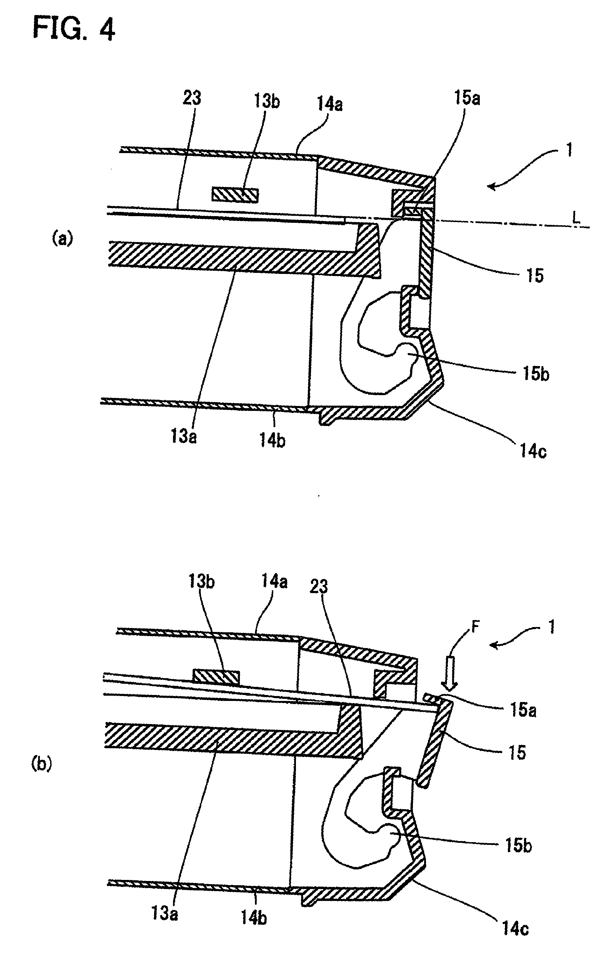

As shown in FIGS. 2 and 3, a convex portion 15a of which height is higher than thickness of the disk medium 23 is formed on an inner surface side (the side opposed to the front panel 14c) of the flap 15. FIGS. 4 are diagrams showing an overview of a section along a line A to A of FIG. 1. As shown in FIG. 4 (a), the convex portion 15a is formed on a side farther from a rotation axis 15b of the flap 15 than an extended line L of the same plane as the disk medium 23 (the same plane as a top surface side of the disk medium 23) on the inner surface side of the flap 15 in a state of having the disk medium 23 loaded in the disk device with the flap 15 built into the DVD player 1 so as to be approximately in parallel with the same plane.

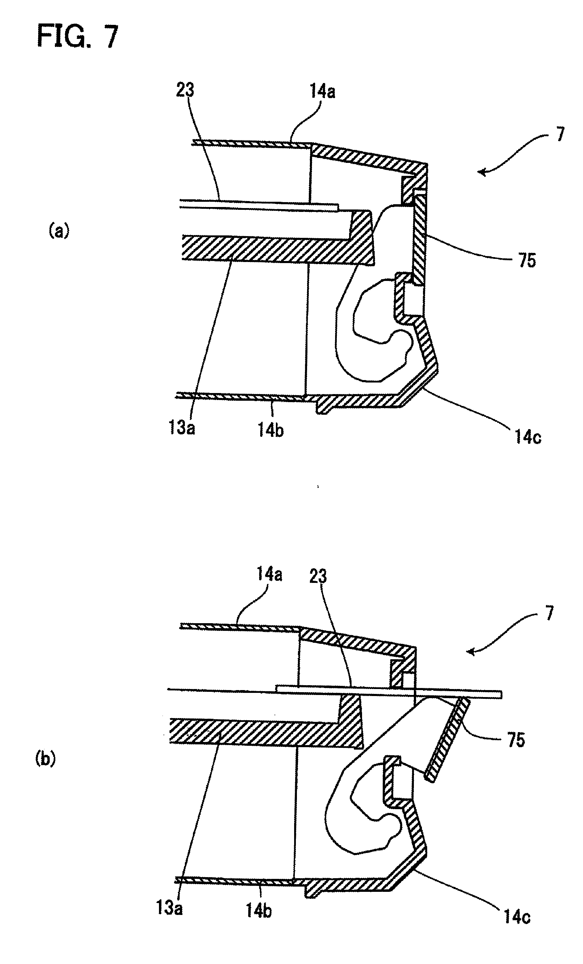

FIGS. 7 are diagrams showing an overview of a conventional DVD player (having no convex portion formed on the inner surface side of a flap 75) (the same ones as those in this embodiment are given the same symbols) . As shown in FIGS. 7, in the cases where, as to a conventional DVD player 7, some problem occurs to a mechanism (clamper mechanism) for holding the disk medium 23 during its rotation or the disk medium 23 is damaged and the disk medium 23 or fragments thereof fly off due to a centrifugal force in the direction of the extended line of the same plane as the disk medium 23 (a normal direction of a disk circumference) to hit the inner surface side of the flap 75, there is a possibility that the flap 75 may rotate to open due to an impact of the hit and open as pushed through as-is (a contact of the disk medium 23 and the flap 75 slide to push open the flap 75) so that the disk medium 23 or the fragments thereof pop out of the device (FIG. 7 (b)) . As the flap 75 is energized to close by the spring member (not shown), an energizing force of the spring member prevents "the flap 75 from rotating to open" and also prevents the fragments thereof from popping out of the device as to the impact of relatively small fragments. In comparison, there is a possibility that the fragments or the like may pop out of the device in the cases where the fragments are large or the disk medium 23 flies as-is due to a damage of the clamper mechanism or the like because the energizing force of the spring member cannot resist sufficiently (although it is thinkable to reinforce the spring to be able to resist a great impact, there is a possibility in this case that the movement of the disk tray 13a may be blocked and "sound" on closing the flap 75 may become loud so as to reduce product salability of the device).

In comparison, according to the DVD player 1 of this embodiment, in the case where, as shown in FIGS. 4, the disk medium 23 or the fragments thereof fly off due to a centrifugal force in the direction of the extended line L of the same plane as the disk medium 23 to hit the inner surface side of the flap 15, the flap 15 rotates to open due to the impact of the hit but the fragments of the disk medium 23 contact a rotation axis 15b side of the flap 15 from the convex portion 15a formed on the inner surface side of the flap 15 so as to be caught by the convex portion 15a and receive an external force F toward the rotation axis 15b side of the flap 15 as the flap 15 further rotates (FIG. 4 (b)) . Therefore, the fragments of the disk medium 23 having flown off receive the torque due to the external force F, which increases the projection area of the rotated fragments viewed from the disk tray outlet 14c1 (opening) side (the projection area of the disk medium 23 viewed from this direction is only thickness x diameter of the disk under normal circumstances). Thus, it is possible to prevent the fragments of the disk medium 23 having flown off from popping out of the device because the projection area viewed from the disk tray outlet 14c1 side increases and so they can no longer pass the disk tray outlet 14c1. (In the case where the fragments are extremely small, the "projection area" thereof is also small and so it hardly follows that "they can no longer pass the disk tray outlet 14c1." As previously mentioned, however, the impact is also small when the fragments are extremely small so that the energizing force of the spring member (or inertia moment of the flap 15 without relying on the energizing force of the spring member as the case may be) prevents the flap 15 from opening.) In reality, the members are mounted densely in the device. Therefore, as shown in FIG. 4 (b), the disk medium 23 having rotated (having its traveling direction limited by the convex portion 15a) loses its kinetic energy by contacting the members at multiple points (in FIG. 4 (b), it contacts (is sandwiched by) the convex portion 15a, an end of the disk tray 13a and a clamper support portion 13b so that it cannot further travel to the front side of the device). Therefore, it should be described as "having its traveling direction limited by the convex portion 15a and thereby losing its kinetic energy so as not to swiftly pop out of the device" rather than "not able to pass the disk tray outlet 14c1."

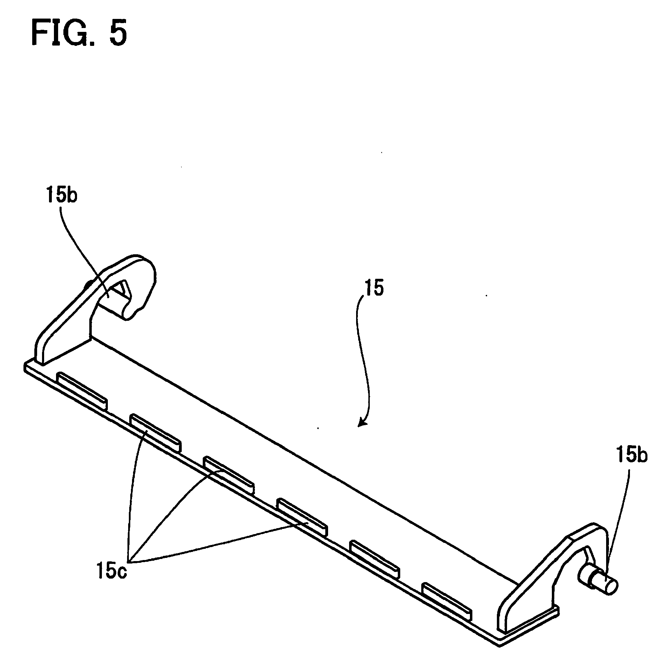

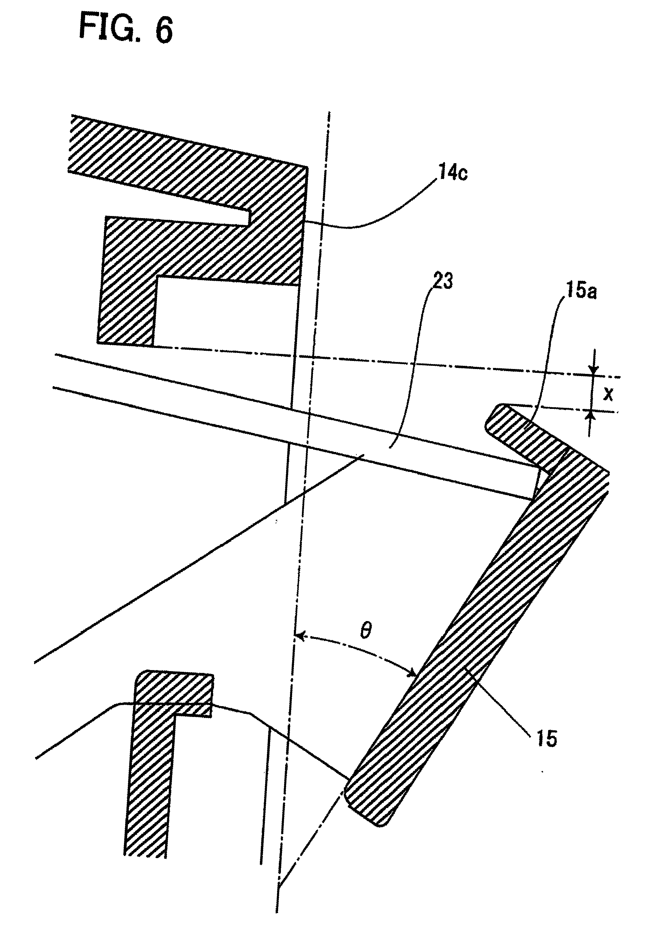

The convex portion 15a is not limited to a "rib" contiguous in a longitudinal direction as shown in FIG. 3 but may also be formed as a noncontiguous convex portion 15c as shown in FIG. 5 (as for the convex portion 15c shown in FIG. 5, the length along the longitudinal direction of the flap 15 is longer than the length along the shorter direction. However, the length along the longitudinal direction of the flap 15 may inversely be shorter than the length along the shorter direction, and the form of the convex portion itself is not limited to a "rectangle" but may also be a circular or polygonal form. In addition, the convex portion is not limited to one line or the one formed on one line as shown in FIG. 3 or 5 but may also be formed as multiple lines) . According to this embodiment, the height of the convex portion 15a is higher than thickness of the disk medium 23 so as to effectively catch the disk medium 23 or the fragments thereof by means of the convex portion 15a. To be more precise, if an angle of the flap 15 against a vertical plane is θ when the flap 15 rotates and vertical length of space between the disk tray outlet 14c1 and the flap 15 (x of FIG. 6) is the same as the thickness of the disk medium 23 (that is, a state in which the disk medium 23 can pop out horizontally), the convex portion 15a should have the height higher than d (thickness of the disk medium 23) x sinθ to be able to have the effect of preventing the disk medium 23 or the fragments thereof from popping out. As a result of a trial actually performed, it was verified that "the effect of preventing the fragments from popping out" can be effectively obtained in the case where the height of the convex portion 15a is 3 mm or so (about 2.5 times the thickness of the disk because the thickness of the disk medium used for the trial is 1.2 mm or so).

The embodiment described the DVD player as an example of the playback device. However, the present invention is not limited thereto but may be applied to a recording and playback device such as a DVD recorder as a matter of course. Besides, it may also be effectively applied to other disk medium recording and playback devices such as a CD recording and playback device and an LD recording and playback device and also composite devices having these disk medium recording and playback devices built therein (such as an LCD with a built-in DVD and a personal computer with a disk device). The embodiment described a so-called "tray type" disk device as an example. However, it may also be effectively applied to a "slot-in type" disk device provided with a flap (opening and closing door) rotatably formed to open outside of the device.

The effects of the present invention are as follows.

The disk medium recording and playback device according to the first aspect of the present invention comprises: a disk device for reading and/or writing a signal from a disk medium; an opening for loading the disk medium into the device; and an opening and closing door for opening and closing the opening, the door rotatably formed to open outside of the device, and wherein a contiguous or noncontiguous convex portion is formed on a side farther from a rotation axis of the opening and closing door than an extended line of the same plane as the disk medium on an inner surface side of the opening and closing door in a state of having the disk medium loaded in the disk medium recording and playback device so as to be approximately in parallel with the same plane. According to this disk medium recording and playback device, in the case where the disk medium in rotation is damaged and fragments thereof fly off due to a centrifugal force in a direction of the extended line of the same plane as the disk medium to hit the inner surface side of the opening and closing door, the door rotates to open due to an impact of the hit but the fragments of the disk medium contact the rotation axis side of the door from the convex portion formed on the inner surface side of the door so as to be caught by the convex portion and receive an external force toward the rotation axis side of the door as the door further rotates. Therefore, the fragments of the disk medium having flown off receives torque due to the external force, which increases projection area of the rotated fragments viewed from the opening side (opening for loading the disk medium into the device) (the projection area of the disk medium viewed from this direction is only thickness x diameter of the disk under normal circumstances). Thus, it is possible to prevent the fragments of the disk medium having flown off from popping out of the device (the projection area viewed from the opening side increases so that they can no longer pass the opening).

The disk medium recording and playback device according the third aspect of the present invention which is the one according to the first or second aspect, wherein height of the contiguous or noncontiguous convex portion is at least higher than thickness of the disk medium, it is formed so that the height of the convex portion on the inner surface side of the opening and closing door is higher than the thickness of the disk medium. Therefore, in the case where the disk medium in rotation is damaged and fragments thereof hit the inner surface side of the opening and closing door, the fragments can be caught by the convex portion more securely. Thus, it is possible to more securely prevent the fragments of the disk medium having flown off from popping out of the device.

## Claims

1. A disk medium recording and playback device, comprising:
a disk device for reading and/or writing a signal from a disk medium;
an opening for loading the disk medium into the device; and
an opening and closing door for opening and closing the opening, the door rotatably formed to open outside of the device, and wherein
a contiguous or noncontiguous convex portion is formed on a side farther from a rotation axis of the opening and closing door than an extended line of a same plane as the disk medium on an inner surface side of the opening and closing door in a state of having the disk medium loaded in the disk medium recording and playback device so as to be approximately in parallel with the same plane.

2. The disk medium recording and playback device according to claim 1, wherein
the disk device includes a disk tray for placing the disk medium slidably provided to a frame configuring an enclosure of the disk device; and
the opening is a disk tray outlet for exposing the disk tray outside of the device.

3. The disk medium recording and playback device according to claim 1 or 2, wherein
height of the contiguous or noncontiguous convex portion is at least higher than thickness of the disk medium.
